(19) Europäisches Patentamt
European Patent Office
Office européen des brevets

(11) **EP 4 614 662 A1**

(12) **EUROPEAN PATENT APPLICATION**

(43) Date of publication:
**10.09.2025 Bulletin 2025/37**

(21) Application number: **24196086.3**

(22) Date of filing: **23.08.2024**

(51) International Patent Classification (IPC):
***H01M 10/42*** (2006.01)     ***H01Q 21/00*** (2006.01)

(52) Cooperative Patent Classification (CPC):
**H01M 10/425; H01Q 1/2208; H01Q 15/14;**
**H01Q 19/10;** H01M 2010/4271; H01M 2010/4278;
H01Q 1/3208

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **05.03.2024 KR 20240031529**

(71) Applicant: **SAMSUNG SDI CO., LTD.**
**Giheung-gu**
**Yongin-si, Gyeonggi-do**
**17084 (KR)**

(72) Inventor: **Mun, Seongjin**
**17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **BATTERY PACK INCLUDING BMS COMMUNICATING WIRELESSLY**

(57) A battery pack includes a battery module, a module battery management system, BMS, configured to monitor the battery module, a main BMS configured to exchange radio signals with the module BMS through wireless communication, and a signal reflection unit configured to reflect the radio signals exchanged between the module BMS and the main BMS toward the module BMS or the main BMS.

FIG. 2

## Description

CROSS-REFERENCE TO RELATED APPLICATION

FIELD

One or more embodiments relate to a battery pack including a battery management system (BMS) that communicates wirelessly.

BACKGROUND

A secondary battery can be charged and discharged, unlike a primary battery that cannot be recharged. Low-capacity secondary batteries are used in small portable electronic devices such as smartphones, feature phones, laptop computers, digital cameras, and camcorders, and high-capacity secondary batteries are used as motor-driving power sources, power-storing batteries, etc., for hybrid vehicles, electric vehicles, etc. Such a secondary battery may include an electrode assembly including a cathode and an anode, a case accommodating the electrode assembly, an electrode terminal connected to the electrode assembly, etc.

To configure battery packs for electric vehicles including such secondary batteries, wireless battery management system (BMS) technology is attracting attention. The wireless BMS has the advantage of not requiring cables for communication between modules. However, as wired communication is replaced with wireless communication, communication quality is inevitably affected by antenna sensitivity in reception or transmission situations, and if communication quality deteriorates, stable BMS operation becomes difficult to achieve.

The above-described information disclosed in the technology section that serves as the background of the present disclosure is only for improving the understanding of the background of the present disclosure, and thus may include information that does not constitute prior art.

SUMMARY

One or more embodiments include a battery pack including a battery management system (BMS) that communicates wirelessly.

However, technical problems to be solved by the present disclosure are not limited to the above-mentioned problem, and other problems not mentioned may be clearly understood by those of ordinary skill in the art from the description of the present disclosure described below.

Additional aspects will be set forth in part in the description which follows and, in part, will be apparent from the description, or may be learned by practice of the presented embodiments of the present disclosure.

According to one or more embodiments, a battery pack includes a battery module, a module battery management system (BMS) configured to monitor the battery module, a main BMS configured to exchange radio signals with the module BMS through wireless communication, and a signal reflection unit configured to reflect the radio signals exchanged between the module BMS and the main BMS toward the module BMS or the main BMS.

According to an example, the module BMS may include a module BMS antenna unit configured to exchange radio signals with the main BMS.

According to an example, the main BMS may include a main BMS antenna unit configured to exchange radio signals with the module BMS.

According to another example, the signal reflection unit may include a structure having a parabolic curved surface.

According to another example, the signal reflection unit may be located at a distance from the main BMS antenna unit of the main BMS, the distance being equal to a focal length of the parabolic curved surface such that the main BMS antenna unit is located at a focus of the parabolic curved surface.

According to another example, the signal reflection unit may include a structure configured to reflect, toward the module BMS antenna unit, radio signals transmitted from the main BMS antenna unit.

According to another example, the signal reflection unit may include a structure configured to reflect, toward the main BMS antenna unit, radio signals transmitted from the module BMS antenna unit.

According to another example, the signal reflection unit may include a structure having a surface facing the main BMS antenna unit, the surface being plated with a conductive material, e.g., a conductive metal.

According to another example, the signal reflection unit may include a structure in which the focal length of the parabolic curved surface is preset based on positions of the main BMS antenna unit and the module BMS antenna unit.

According to another example, the signal reflection unit may include a structure in which the focal length of the parabolic curved surface is preset such that the radio signals transmitted from the main BMS antenna unit are reflected and oriented toward the module BMS antenna unit.

According to one or more embodiments, a method of operating a battery pack including a battery module, a module battery management system (BMS), a main BMS, and a signal reflection unit includes monitoring, by the module BMS, the battery module, exchanging, by the main BMS, radio signals with the module BMS through wireless communication, and reflecting, by the signal reflection unit, the radio signals exchanged between the module BMS and the main BMS toward the module BMS or the main BMS.

According to an example, the module BMS may include a module BMS antenna unit, and the exchanging may include the module BMS antenna unit exchanging radio signals with the main BMS.

According to another example, the main BMS may include a main BMS antenna unit, and the exchanging may further include the main BMS antenna unit exchanging radio signals with the module BMS.

According to another example, the signal reflection unit may include a structure having a parabolic curved surface.

According to another example, the signal reflection unit may be located at a distance from the main BMS antenna unit of the main BMS, the distance being equal to a focal length of the parabolic curved surface such that the main BMS antenna unit is located at a focus of the parabolic curved surface.

According to another example, the reflecting may include reflecting, by the signal reflection unit, toward the module BMS antenna unit, radio signals transmitted from the main BMS antenna unit.

According to another example, the reflecting may include reflecting, by the signal reflection unit, toward the main BMS antenna unit, radio signals transmitted from the module BMS antenna unit.

According to another example, the signal reflection unit may include a structure having a surface facing the main BMS antenna unit, the surface being plated with a conductive material, e.g., a conductive metal.

According to another example, the signal reflection unit may include a structure in which the focal length of the parabolic curved surface is preset based on positions of the main BMS antenna unit and the module BMS antenna unit.

According to another example, the signal reflection unit may include a structure in which the focal length of the parabolic curved surface is preset such that the reflecting includes the radio signals transmitted from the main BMS antenna unit being reflected and oriented towards the module BMS antenna unit.

BRIEF DESCRIPTION OF THE DRAWINGS

The above and other aspects, features, and advantages of certain embodiments of the present disclosure will be more apparent from the following description taken in conjunction with the accompanying drawings.

The following drawings attached to this specification illustrate preferred embodiments of the present disclosure, and serve to further understand the technical idea of the present disclosure together with the detailed description of the present disclosure described later, so the present disclosure should not be construed as being limited to the matters shown in such drawings.

FIG. 1 schematically shows a battery pack according to embodiments of the present disclosure;
FIG. 2 schematically shows a vehicle body including a battery pack according to embodiments of the present disclosure;

FIG. 3 is a diagram illustrating a structure using which a radio signal is reflected from a signal reflection unit, according to embodiments of the present disclosure; and
FIG. 4 is a diagram illustrating a focal length of a parabolic curved surface of a signal reflection unit, according to embodiments of the present disclosure.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, embodiments of the present disclosure will be described in detail with reference to the accompanying drawings. The terms and words used in the present specification and claims described above should not be construed as being limited to ordinary or dictionary meanings, and should be interpreted as meanings and concepts consistent with the technical idea of the present disclosure based on the principle that the present inventors may appropriately define the concept of the terms to describe their invention in the best way. Therefore, it should be understood that the configurations shown in the drawings and embodiments described in this specification are merely the most preferred embodiments of the present disclosure, and do not represent all of the technical ideas of the present disclosure, such that there may be various equivalents and variations that replace them at the time of filing the present application. If used herein, "comprise, include" and/or "comprising, including" specify mentioned shapes, numbers, steps, operations, members, components, and/or presence of these groups, and do not exclude the presence or addition of one or more different shapes, numbers, operations, members, components, and /or groups. If embodiments of the present disclosure are described, "can" or "may" may include "one or more embodiments of the present disclosure".

To help understanding of the present disclosure, the accompanying drawings are not shown according to the actual scale, but the dimensions of some components may be exaggerated. The same reference numeral may be given to the same component in different embodiments.

The statement that two comparison targets are 'the same' as each other may mean that they are 'substantially the same' as each other. Thus, a case where they are 'substantially the same' as each other may include a case where they have a deviation regarded as a low level, e.g., a deviation of 5 % or less. If a uniform parameter is uniform in a predetermined area, it may mean that it is uniform from an average point of view.

Although first, second, etc., may be used to describe various components, these components are not limited by these terms. These terms are only used to distinguish one component from other components, and unless specifically stated to the contrary, a first component may be a second component.

Throughout the specification, unless specially stated to the contrary, each component may be singular or plural.

If a component is arranged on "a top portion (or a bottom portion)" of another component or "on (or under)" the other component, it may mean not only a case where the component is arranged adjacent to a top surface (or a bottom surface) of the other component, but also a case where another component may be interposed between the other component and the component arranged on (or under) the other component.

If a component is described as being "connected", "coupled", or "connected" to another component, it should be understood that the components are directly connected or connectable to each other, but another component may be "interposed" between the components, or the components may be may be "connected", "coupled", or "connected" to each other through another component. If a portion is electrically coupled to another portion, this may include not only a case where they are directly connected to each other, but also a case where they are connected with another element therebetween.

Throughout the specification, "A and/or B" may mean A, B, or A and B unless specially stated otherwise. That is, "and/or" may include all or any combination of a plurality of items listed. "C to D" may mean at least C but not more than D, unless specially stated otherwise.

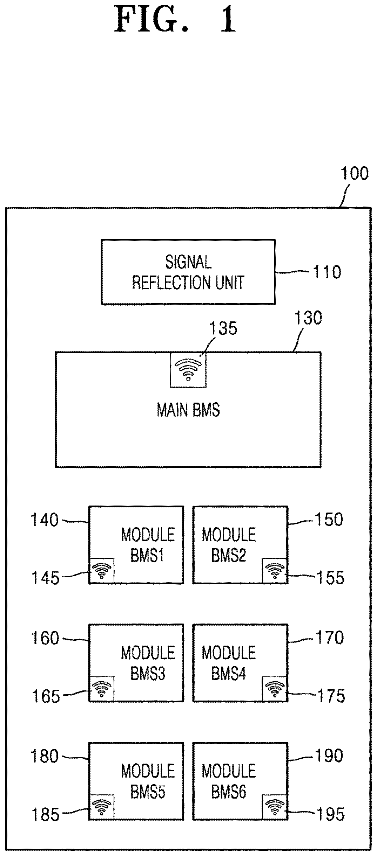

FIG. 1 schematically shows a battery pack according to embodiments of the present disclosure.

Referring to FIG. 1, a battery pack 100 according to embodiments of the present disclosure may include a signal reflection unit 110, a main battery management system (BMS) 130, module BMSs 140, 150, 160, 170, 180, and 190, a main BMS antenna unit 135, and module BMS antenna units 145, 155, 165, 175, 185, and 195.

The battery pack 100 according to embodiments of the present disclosure may include at least one battery module and a pack housing in which an accommodation space is formed to accommodate the at least one battery module. The battery module may include a plurality of battery cells and a module housing. The battery cells may be accommodated in a stacked form in the module housing. Each battery cell may include an anode lead and a cathode lead. The battery cell may be of a circular type, a prismatic type, or a pouch type, depending on a shape of a battery. The number of battery modules may be, but is not limited to, 2, 4, 6, 8, or 12. For each battery module, the battery pack 100 may comprise a module battery management system (or module BMS). In other words, the number of battery modules may be the same as the number of module battery management systems. Each module battery management system may be dedicated to and monitor one battery module.

The battery module may include at least one battery cell that may be a chargeable secondary battery. For example, the battery cell may include at least one selected from a group including a nickel-cadmium battery, a lead acid battery, a nickel metal hydride battery (NiMH), a lithium ion battery, a lithium polymer battery, etc.

The number of battery cells included in the battery module and a connection scheme thereof may be determined based on a power amount, a voltage, etc., required for the battery pack 100. For example, the battery cells may be connected in parallel to each other and/or in series to each other, including set-ups in which battery cells are connected both in parallel and in series. The battery pack 100 may include a plurality of battery modules connected in series, in parallel, or in series and in parallel. The battery module may include one battery cell or a plurality of battery cells.

The battery pack 100 according to embodiments of the present disclosure may include a main BMS 130 and module BMSs 140, 150, 160, 170, 180, and 190. The main BMS 130 and the module BMSs 140, 150, 160, 170, 180, and 190 may indicate BMSs for managing a battery pack and a battery module. For example, the BMS may include a detection device, a balancing device, and a control device. For example, referring to FIG. 1, the module BMSs 140, 150, 160, 170, 180, and 190 may respectively monitor battery modules. For example, the first module BMS 140 may monitor a first battery module, the second BMS 150 may monitor a second battery module, the third module BMS 160 may monitor a third battery module, the fourth module BMS 170 may monitor a fourth battery module, the fifth module BMS 180 may monitor a fifth battery module, and the sixth module BMS 190 may monitor a sixth battery module. The main BMS 130 may manage the battery pack 100. The main BMS 130 and the module BMSs 140, 150, 160, 170, 180, and 190 may exchange radio signals with each other through wireless communication.

The detection device may sense a state (a voltage, a current, a temperature, etc.) of a battery to detect state information indicating the state of the battery. The detection device may detect a voltage of each cell or each battery module of the battery. The detection device may detect current flowing through the battery module or each battery module of the battery pack. The detection device may detect a temperature of a cell and/or module or an ambient temperature in at least a point of the battery.

The balancing device may perform a balancing operation on a battery module and/or cells of the battery.

The control device may receive state information (a voltage, a current, a temperature, etc.) of a battery module from the detection device. The control device may monitor and calculate a state (a voltage, a current, a temperature, a state of charge (SOC), a lifetime, a state of health (SOH), etc.) of a battery module, based on the state information received from the detection device. The control device may perform a control function (e.g., temperature control, balancing control, charging/discharging control, etc.), a protection function (e.g., prevention of over-discharge, overcharge, and over-current, short-circuit, fire extinguishment, etc.), and so forth, based on a state monitoring result. The control device may also perform a wired or wireless communication function with an external device (e.g., a higher-level controller, a vehicle, a charger, a PCS (power conversion system), etc.) of a battery pack. In addition, the control device may control a charging/discharging operation and a protection operation of the battery. To this end, the control device may include a charging/discharging controller, a balancing controller, and a protection unit.

The BMS, which is a system that monitors a state of a battery and performs diagnosis and control, communication, and protection, may calculate a charging/discharging state, calculate a lifetime or a state of health (SOH) of the battery, block power of the battery (relay control) if required, control thermal management (cooling, heating, etc.), perform a high-voltage interlocking function, and detect or calculate an insulation and short-circuit state.

The main BMS 130 according to embodiments of the present disclosure may include a main BMS antenna unit 135. The module BMSs 140, 150, 160, 170, 180, and 190 may respectively include module BMS antenna units 145, 155, 165, 175, 185, and 195. For example, the main BMS antenna unit 135 and the module BMS antenna units 145, 155, 165, 175, 185, and 195 may indicate antenna devices that perform wireless communication. For example, the main BMS 130 and the module BMSs 140, 150, 160, 170, 180, and 190 may exchange radio signals with each other through wireless communication by using the main BMS antenna unit 135 and the module BMS antenna units 145, 155, 165, 175, 185, and 195. For example, the antenna device and a scheme of the wireless communication used may be a known device and scheme, respectively.

The battery pack 100 according to embodiments of the present disclosure may include the signal reflection unit 110. For example, the signal reflection unit 110 may be a structure having a surface facing an antenna that radiates a radio signal, in which the surface is plated with conductive metal to reflect the radio signal. For example, the signal reflection unit 110 may indicate a structure that reflects, toward the module BMSs 140, 150, 160, 170, 180, and 190 or the main BMS 130, radio signals exchanged between the module BMSs 140, 150, 160, 170, 180, and 190 and the main BMS 130. In particular, the signal reflection unit 110 may be configured to reflect radio signals sent by the main BMS 130 in a direction of one or more module BMSs 140, 150, 160, 170, 180 and 190. The signal reflection unit 110 may be alternatively or at the same time be configured to reflect radio signals sent by one or more module BMSs 140, 150, 160, 170, 180 and 190 in a direction of the main BMS 130. For example, the main BMS 130 may be arranged between the signal reflection unit 110 and one or more module BMSs 140, 150, 160, 170, 180 and 190. In this way, the same signal reflection unit 110 may be used to enhance both transmission from the main BMS 130 to the module BMSs 140, 150, 160, 170, 180 and 190, and vice versa.

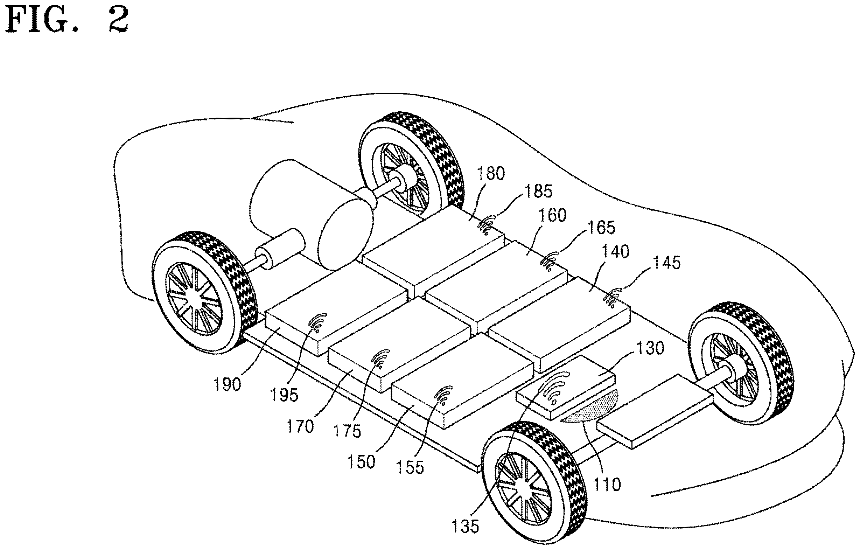

FIG. 2 schematically shows a vehicle body including a battery pack according to embodiments of the present disclosure.

Referring to FIG. 2, a structure is shown in which the battery pack 100 according to embodiments of the present disclosure is provided under a vehicle body. For example, the battery pack 100 may include six battery modules. For example, the six battery modules may be electrically connected to each other in series/parallel or in a serial/parallel combination manner. As shown in FIG. 2, the module BMSs 140, 150, 160, 170, 180, and 190 may be provided in respective battery modules. For example, the module BMSs 140, 150, 160, 170, 180, and 190 may be arranged in a housing or case of the respective battery module. The module BMSs 140, 150, 160, 170, 180, and 190 may respectively include the module BMS antenna units 145, 155, 165, 175, 185, and 195 that exchange radio signals with the main BMS 130. The main BMS 130 may include the main BMS antenna unit 135 that exchanges radio signals with the module BMS antenna units 145, 155, 165, 175, 185, and 195 of the respective module BMSs 140, 150, 160, 170, 180, and 190.

The signal reflection unit 110 may be a structure having a parabolic curved surface. For example, the signal reflection unit 110 may be a structure in which a surface facing the main BMS antenna unit 135 or the module antenna units 145, 155, 165, 175, 185, and 195 has a parabolic curved surface that is plated with conductive metal.

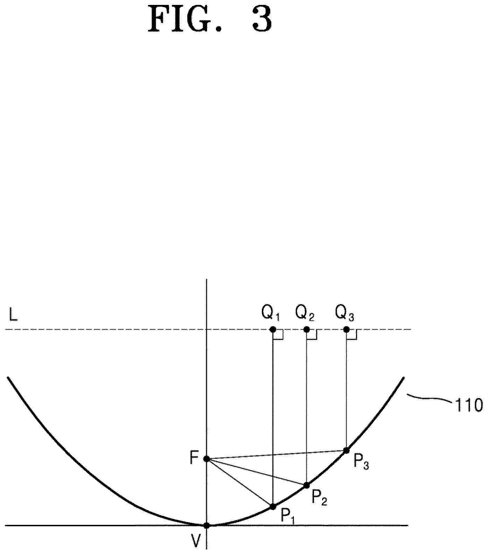

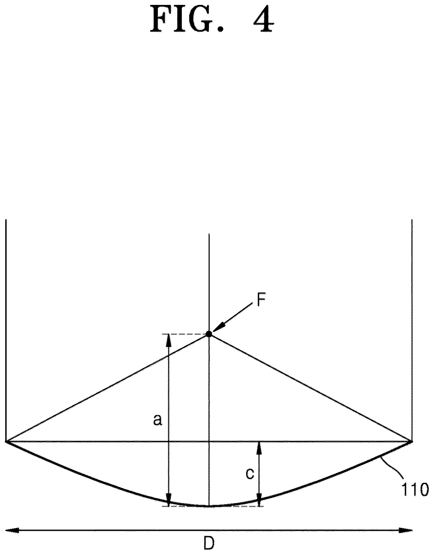

FIG. 3 is a diagram illustrating a structure using which a radio signal is reflected from a signal reflection unit, according to embodiments of the present disclosure. FIG. 4 is a diagram illustrating a focal length of a parabolic curved surface of a signal reflection unit, according to embodiments of the present disclosure.

Referring to FIGS. 2 to 4 together, the signal reflection unit 110 according to embodiments of the present disclosure may have a structure that has a concave surface facing the main BMS antenna unit 135 and/or the module BMS antenna units 145, 155, 165, 175, 185, and 195. The signal reflection unit 110 may use a parabolic curved surface structure of a parabolic antenna, such as a satellite antenna, thereby improving sensitivity by enhancing the directivity of a radio signal in radio signal reception or transmission of the main BMS antenna unit 135 of the main BMS 130. The signal reflection unit 110 may have a reflective surface. Viewed in a projection along a longitudinal axis of the battery pack, the surface may have an approximately rectangular circumference. The surface may be curved around a vertical axis. The surface may also be curved around a horizontal axis, for example around an axis perpendicular to the longitudinal axis of the battery pack. A width of the surface can be greater than a height of the surface.

For example, as shown in FIGS. 3 and 4, the signal reflection unit 110 may be disposed such that the main BMS antenna unit 135 is located at a focus F of the signal reflection unit 110. For example, the signal reflection unit 110 may be located at a distance equal to a focal length a of a parabolic curved surface from the main BMS antenna unit 135 of the main BMS 130 such that the main BMS antenna unit 135 is located at the focus F of the parabolic curved surface. For example, a curvature of the parabolic curved surface of the signal reflection unit 110 may be calculated in advance and preset. For example, the curvature of the surface may be determined based on the distance between the signal reflection unit 110 and the main BMS antenna unit 135.

The signal reflection unit 110 may have a structure or a surface that reflects, toward the module BMS antenna units 145, 155, 165, 175, 185, and 195, radio signals transmitted from the main BMS antenna unit 135. The signal reflection unit 110 may have a structure or a surface that reflects, toward the main BMS antenna unit 135, radio signals transmitted from the module BMS antenna units 145, 155, 165, 175, 185, and 195. For example, as shown in FIGS. 2 and 3, a radio signal transmitted from the main BMS antenna unit 135 located at the focus F may be reflected from reflection points $P_1$, $P_2$, and $P_3$ of the signal reflection unit 110 and may be propagated toward points $Q_1$, $Q_2$, and $Q_3$ of the module BMS antenna units 145, 155, 165, 175, 185, and 195. For example, the module BMS antenna units 145, 155, 165, 175, 185, and 195 may be disposed at the points $Q_1$, $Q_2$, and $Q_3$ toward which the radio signal is oriented after being reflected from the reflection points $P_1$, $P_2$, and $P_3$. In other words, the module BMS antenna units 145, 155, 165, 175, 185, and 195 may be arranged in such a way that radiation emanating from the main BMS antenna unit 135 is transmitted to different module BMS antenna units 145, 155, 165, 175, 185, and 195, depending on the location at which the radiation impinges on the reflection unit 110. In this way it can be avoided that one of the module BMS antenna units 145, 155, 165, 175, 185, and 195 is positioned in the radio shadow of another module BMS antenna unit 145, 155, 165, 175, 185, and 195.

The signal reflection unit 110 may be a structure in which a surface facing the main BMS antenna unit 135 is plated with conductive metal. In the signal reflection unit 110 according to some embodiments of the present disclosure, an inner surface has a semi-circular shape and is treated with conductive metal plating to serve as a radio signal reflection plate, thereby improving directivity of a radio signal toward the main BMS antenna unit 135 or the module BMS antenna units 145, 155, 165, 175, 185, and 195 and thus enhancing the sensitivity of reception or transmission of a radio signal.

The signal reflection unit 110 may be a structure in which a focal length of a parabolic curved surface is preset, or determined, based on the positions of the main BMS antenna unit 135 and the module BMS antenna units 145, 155, 165, 175, 185, and 195. For example, the focal length of the parabolic curved surface may be determined based on the positions of the main BMS antenna unit 135 and the module BMS antenna units 145, 155, 165, 175, 185, and 195.

The signal reflection unit 110 may be a structure in which the focal length of the parabolic curved surface is preset, or determined, such that the radio signals transmitted from the main BMS antenna unit 135 are reflected and oriented toward the module BMS antenna units 145, 155, 165, 175, 185, and 195.

For example, as shown in FIG. 4, the main BMS antenna unit 135 may be disposed at the focus F of the parabolic curved surface of the signal reflection unit 110 according to embodiments of the present disclosure.

The curvature of the parabolic curved surface of the signal reflection unit 110 may be calculated as below.

$$[0067] \quad a = (D*D)/(16*c)$$

Herein, a may be a focal length of the signal reflection unit 110, c may be a depth of the signal reflection unit 110, and D may be a width of the signal reflection unit 110.

For example, in the signal reflection unit 110 having D of about 10 cm and c of about 1 cm, the position of the main BMS antenna unit 135 may be located at a focal length of about 6.25 cm from the center of the signal reflection unit 110.

According to the present disclosure, the sensitivity of the antenna in charge of reception or transmission of data in a wireless BMS may be improved through the signal reflection unit included in the wireless BMS.

The signal reflection unit according to the present disclosure may be a structure in which a surface visible to the antenna, or facing the antenna, and having a semi-circular shape is plated with metal to improve directivity of a signal in a desired direction in wireless reception or transmission via the antenna, thereby enhancing wireless sensitivity, and the principle of a parabolic antenna having a parabolic curved surface is applied to a wireless BMS, thereby improving the performance of a wireless antenna.

While the present disclosure describes some embodiments and drawings, the present disclosure is not limited thereby and various modifications and changes may be made by those of ordinary skill in the art within the range to the claims set forth below.

Various embodiments of the present disclosure may be implemented in the form of a computer program executable on a computer through various components, and the computer program may be recorded on a computer-readable medium. The medium may continuously store an executable program or temporarily store the same for execution or downloading. The medium may include various recording means or storage means in a form of single hardware or a combination of several hardware, and may be distributed over a network without being limited to a medium directly connected to a certain computer system. Examples of the medium may include a magnetic medium such as a hard disk, a floppy disk, and a magnetic tape, an optical recording medium such as a compact disc (CD)-read-only memory (ROM) and a digital versatile disk (DVD), a magneto-optical medium such as a floptical disk, ROM, random-access memory (RAM), flash memory, etc., to store a program instruction. Other examples of the medium may include a recording medium or a storage medium managed by an app store that distributes applications, a site that supplies or distributes various software, a server, etc.

In the specification, the term "unit", "module", etc., may be a hardware component like a processor or a circuit, and/or a software component executed by a hardware component like a processor. For example, "unit", "module", etc., may be implemented by components such as software components, object-oriented software components, class components, and task components, processes, functions, properties, procedures, subroutines, segments of program code, drivers, firmware, microcode, circuits, data, a database, data structures, tables, arrays, and variables.

According to the present disclosure, in a battery pack including a BMS that communicates wirelessly, the reception or sensitivity of an antenna included in the BMS may be efficiently improved.

However, effects that may be obtained through the present disclosure are not limited to the above-described effects, and other technical effects not mentioned may be clearly understood by those of ordinary skill in the art from the description of the present disclosure described below.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

**Claims**

1. A battery pack (100) comprising:

   a battery module;
   a module battery management system (140, 150, 160, 170, 180, 190), BMS, configured to monitor the battery module;
   a main BMS (130) configured to exchange radio signals with the module BMS (140, 150, 160, 170, 180, 190) through wireless communication; and
   a signal reflection unit (110) configured to reflect the radio signals exchanged between the module BMS (140, 150, 160, 170, 180, 190) and the main BMS (130) toward the module BMS (140, 150, 160, 170, 180, 190) or the main BMS (130).

2. The battery pack (100) as claimed in claim 1, wherein the module BMS (140, 150, 160, 170, 180, 190) comprises a module BMS antenna unit (145, 155, 165, 175, 185, 195) configured to exchange radio signals with the main BMS (130).

3. The battery pack (100) as claimed in claim 1 or claim 2, wherein the main BMS (130) comprises a main BMS antenna unit (135) configured to exchange radio signals with the module BMS (140, 150, 160, 170, 180, 190).

4. The battery pack (100) as claimed in one of claims 1 to 3, wherein the signal reflection unit (110) comprises a structure having a parabolic curved surface.

5. The battery pack (100) as claimed in claim 4, wherein the signal reflection unit (110) is located at a distance from the main BMS (130) antenna unit (135) of the main BMS (130), the distance being equal to a focal length of the parabolic curved surface such that the main BMS antenna unit (135) is located at a focus of the parabolic curved surface.

6. The battery pack (100) as claimed in one of claims 1 to 5, wherein the module BMS (140, 150, 160, 170, 180, 190) comprises a module BMS antenna unit and the main BMS (130) comprises a main BMS antenna unit (135), and wherein the signal reflection unit (110) comprises a structure configured to reflect, toward the module BMS antenna unit (145, 155, 165, 175, 185, 195), radio signals transmitted from the main BMS antenna unit (135).

7. The battery pack (100) as claimed in one of claims 1 to 6, wherein the module BMS (140, 150, 160, 170, 180, 190) comprises a module BMS antenna unit and the main BMS (130) comprises a main BMS antenna unit (135), and wherein the signal reflection unit (110) comprises a structure configured to reflect, toward the main BMS antenna unit (135), radio signals transmitted from the module BMS antenna unit (145, 155, 165, 175, 185, 195).

8. The battery pack (100) as claimed in one of claims 1 to 7, wherein the module BMS (140, 150, 160, 170, 180, 190) comprises a module BMS antenna unit and the main BMS (130) comprises a main BMS antenna unit (135), and wherein the signal reflection unit (110) comprises a structure having a surface facing the main BMS antenna unit (135), the surface being plated with conductive metal.

9. The battery pack (100) as claimed in claim 4 or claim 5, wherein the module BMS (140, 150, 160, 170, 180, 190) comprises a module BMS antenna unit and the main BMS (130) comprises a main BMS antenna unit (135), and wherein the signal reflection unit (110) comprises a structure in which the focal length of the parabolic curved surface is preset based on positions of the main BMS antenna unit (135) and the module BMS antenna unit (145, 155, 165, 175, 185, 195).

10. The battery pack (100) as claimed in claim 4, claim 5 or claim 9, wherein the module BMS (140, 150, 160, 170, 180, 190) comprises a module BMS antenna unit and the main BMS (130) comprises a main BMS antenna unit (135), and wherein the signal reflection unit (110) comprises a structure in which the focal length of the parabolic curved surface is preset such that the radio signals transmitted from the main BMS antenna unit (135) are reflected and oriented toward the module BMS antenna unit (145, 155, 165, 175, 185, 195).

11. A method of operating a battery pack (100) comprising a battery module, a module battery management system (140, 150, 160, 170, 180, 190), BMS, a main BMS (130), and a signal reflection unit (110), the method comprising:

   monitoring, by the module BMS (140, 150, 160, 170, 180, 190), the battery module;
   exchanging, by the main BMS (130), radio signals with the module BMS (140, 150, 160, 170, 180, 190) through wireless communication; and
   reflecting, by the signal reflection unit (110), the radio signals exchanged between the module BMS (140, 150, 160, 170, 180, 190) and the main BMS (130) toward the module BMS (140, 150, 160, 170, 180, 190) or the main BMS (130).

12. The method as claimed in claim 11, wherein the module BMS (140, 150, 160, 170, 180, 190) comprises a module BMS antenna unit (145, 155, 165, 175, 185, 195), and the exchanging comprises the module BMS antenna unit (145, 155, 165, 175, 185, 195) exchanging radio signals with the main BMS (130).

13. The method as claimed in claim 11 or claim 12, wherein the main BMS (130) comprises a main BMS antenna unit (135), and the exchanging further comprises the main BMS antenna unit (135) exchanging radio signals with the module BMS (140, 150, 160, 170, 180, 190).

14. The method as claimed in claim one of claims 11 - 13, wherein the signal reflection unit (110) comprises a structure having a parabolic curved surface.

15. The method as claimed in claim 14, wherein the signal reflection unit (110) is located at a distance from the main BMS antenna unit (135) of the main BMS (130), the distance being equal to a focal length of the parabolic curved surface such that the main BMS antenna unit (135) is located at a focus of the parabolic curved surface.

# FIG. 1

FIG. 2

# FIG. 3

# FIG. 4

Europäisches
Patentamt

European
Patent Office

Office européen
des brevets

# EUROPEAN SEARCH REPORT

**Application Number**

EP 24 19 6086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/071238 A1 (HWANG JI-WON [KR]) 9 March 2023 (2023-03-09) | 1-3,6,7, 11-13 | INV. H01M10/42 |
| Y | * page 1, paragraph 10 * <br> * page 2, paragraph 45 - page 3 * <br> * page 5, paragraph 92 - paragraph 94 * <br> * figures 1,2,10 * <br> ----- | 4,5, 8-10,14, 15 | ADD. H01Q21/00 |
| Y | EP 3 691 228 A1 (SAMSUNG ELECTRONICS CO LTD [KR]) 5 August 2020 (2020-08-05) <br><br> * page 5, paragraph 39 - paragraph 40 * <br> * page 12, paragraph 128 - paragraph 130 * <br> ----- | 4,5, 8-10,14, 15 | |
| A | EP 4 071 884 A1 (LG ENERGY SOLUTION LTD [KR]) 12 October 2022 (2022-10-12) * the whole document * <br> ----- | 1-15 | |

**TECHNICAL FIELDS SEARCHED (IPC)**

H04W
H01Q
H04L
H04B
H01M

The present search report has been drawn up for all claims

| Place of search | Date of completion of the search | Examiner |
|---|---|---|
| The Hague | 10 February 2025 | Draa, Sami |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6086

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2025

| Patent document cited in search report | | Publication date | Patent family member(s) | | | Publication date |
|---|---|---|---|---|---|---|
| US 2023071238 | A1 | 09-03-2023 | CN | 114846672 | A | 02-08-2022 |
| | | | EP | 4057417 | A1 | 14-09-2022 |
| | | | JP | 7550855 | B2 | 13-09-2024 |
| | | | JP | 2023504158 | A | 01-02-2023 |
| | | | KR | 20210149482 | A | 09-12-2021 |
| | | | US | 2023071238 | A1 | 09-03-2023 |
| | | | WO | 2021246633 | A1 | 09-12-2021 |
| EP 3691228 | A1 | 05-08-2020 | CN | 111373721 | A | 03-07-2020 |
| | | | EP | 3691228 | A1 | 05-08-2020 |
| | | | KR | 20190060283 | A | 03-06-2019 |
| | | | US | 2020358202 | A1 | 12-11-2020 |
| | | | WO | 2019103398 | A1 | 31-05-2019 |
| EP 4071884 | A1 | 12-10-2022 | CN | 114930605 | A | 19-08-2022 |
| | | | DE | 202021004347 | U1 | 19-10-2023 |
| | | | EP | 4071884 | A1 | 12-10-2022 |
| | | | JP | 7466976 | B2 | 15-04-2024 |
| | | | JP | 2023509931 | A | 10-03-2023 |
| | | | KR | 20220048212 | A | 19-04-2022 |
| | | | US | 2023035589 | A1 | 02-02-2023 |
| | | | WO | 2022080761 | A1 | 21-04-2022 |

EPO FORM P0459

For more details about this annex : see Official Journal of the European Patent Office, No. 12/82